(19) Europäisches Patentamt
European Patent Office
Office européen des brevets

(11) **EP 1 817 828 B1**

(12) **EUROPÄISCHE PATENTSCHRIFT**

(45) Veröffentlichungstag und Bekanntmachung des Hinweises auf die Patenterteilung:
**17.09.2014 Patentblatt 2014/38**

(21) Anmeldenummer: **05791533.2**

(22) Anmeldetag: **08.10.2005**

(51) Int Cl.:
*H02H 9/02* (2006.01)　　　*H02H 3/05* (2006.01)

(86) Internationale Anmeldenummer:
**PCT/EP2005/010850**

(87) Internationale Veröffentlichungsnummer:
**WO 2006/058576 (08.06.2006 Gazette 2006/23)**

(54) **ZUSATZVORRICHTUNG IN EINEM STROMBEGRENZER ZUR BEGRENZUNG DES STROMES IM FALL EINER STÖRUNG**

ADDITIONAL DEVICE IN A CURRENT LIMITER FOR LIMITING CURRENT IN THE EVENT OF A FAULT

DISPOSITIF ADDITIONNEL DANS UN LIMITEUR DE COURANT POUR LIMITER LE COURANT EN CAS D'ERREUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.12.2004 DE 102004058633**

(43) Veröffentlichungstag der Anmeldung:
**15.08.2007 Patentblatt 2007/33**

(73) Patentinhaber: **Karlsruher Institut für Technologie 76131 Karlsruhe (DE)**

(72) Erfinder:
• **JUENGST, Klaus-Peter 76297 Stutensee (DE)**

• **NOE, Mathias 34270 Schauenburg (DE)**
• **KUPERMAN, Grigory 76149 Karlsruhe (DE)**

(56) Entgegenhaltungen:
**WO-A-03/044922　DE-A1- 10 003 556**

• **PATENT ABSTRACTS OF JAPAN Bd. 013, Nr. 207 (E-758), 16. Mai 1989 (1989-05-16) & JP 01 023721 A (MITSUBISHI ELECTRIC CORP), 26. Januar 1989 (1989-01-26)**

**Beschreibung**

Die Erfindung betrifft einen Strombegrenzer zur Strombegrenzung im Fehler-/Kurzschlussfall.

Ein Strombegrenzer mit gesteuerten Ventilen ist aus der DE 100 03 556 bekannt, er besteht aus zwei in Reihe zueinander geschalteten Induktivitäten/Drosseln und zwei in Reihe mit zueinander entgegengesetzter Durchlassrichtung geschalteten, die beiden Induktivitäten überbrückenden, gesteuerten elektrischen Ventilen. In dem bekannten Strombegrenzer sind der gemeinsame Potentialpunkt der elektrischen Ventile und der gemeinsame Potentialpunkt der beiden Induktivitäten miteinander verbunden, nicht notwendigerweise direkt.

Der Strombegrenzer ist in den Leistungsstromkreis einer Anlage eingebaut. Er bildet für den Normal- oder Nennbetrieb, wie in der DE 100 03 556 ausführlich erläutert wird, keinen, allenfalls einen vernachlässigbaren, kleinen ohmschen Widerstand. Erst im Kurzschlussfall in der zu versorgenden Anlage, bzw. beim Überschreiten einer oberen Stromschwelle wird zunächst ein erstes der beiden Ventile und nachfolgend das zweite vom leitenden in den sperrenden Zustand übergeführt und so in den Versorgungsstromkreis der Anlage ein zusätzlicher Widerstand eingebracht, der den Strom begrenzt.

Der Strombegrenzer funktioniert, wie folgt: nach dem Einschalten des Stromkreises fließt bei Erreichen des stationären Zustands in den beiden Kreisen aus Induktivität und überbrückendem Ventil jeweils aufgrund der wirksamen Bauteileparameter ein Kreisgleichstrom $I_0$. Im stationären Nennbetrieb bilden die beiden Induktivitäten keinen Wechselstromwiderstand, da kein zeitveränderlicher Strom fließt. Die beiden Ventile sind gleichartige, gesteuerte Ventile, die beim Einschalten des Leistungsstromkreises über die jeweilige Steuerelektrode aktiv in den leitenden Zustand gehen, sie bestehen bei eventuell erforderlicher Spannungsfestigkeit jeweils aus einer Kaskade von gleichartigen Elementarventilen.

Die Aktivierung des Strombegrenzers (im englischen Sprachgebrauch fault current limiter, FCL, genannt) drückt sich im Kurzschlussfall durch das Auftreten eines ohmschen Widerstands, einer Induktivität, oder eine Kombination von beiden in geeigneter Höhe aus, wodurch der Kurzschlussstrom im Anlagenstromkreis begrenzt wird. Bis zum Nennbetrieb wird der Strombegrenzer nicht "gesehen".

Im Fehlerfall/Kurzschlussfall tritt in der Last beim Überschreiten einer vorgegebenen Fehlerstromschwelle und beim erstmaligen Erreichen der Minimaldauer zur Wiederherstellung der elektrischen Festigkeit für das Anliegen einer der Durchlassrichtung entgegengesetzten Spannung am betroffenen Ventil auf und es geht dieses von selbst vom leitenden in den sperrenden Zustand über und verharrt in diesem. Dieses Verhalten tritt in einer der folgenden Halbperioden am andern, sich noch im leitenden Zustand befindlich Ventil ebenfalls ein, so dass die beiden Induktivitäten schließlich elektrisch in Reihe zueinander zu liegen kommen und als zusätzlicher Wechselstromwiderstand im Stromkreis wirken, wodurch der Strom/Kurzschlussstrom begrenzt bleibt und nicht ausartet. Zur Strombegrenzung in der Energietechnik werden warme Reaktoren sowie supraleitende Drosseln verwendet.

Supraleiter sind für diese Aufgabe besonders geeignet, da sie im Normalbetrieb nur einen kleinen Spannungsabfall haben und der Übergang in die Normalleitung den Aufbau eines hohen elektrischen Widerstandes und das Durchdringen magnetischer Flüsse bewirkt. Dies kann für eine resistive, bzw. induktive Strombegrenzerfunktion genutzt werden (Prof. Dr. techn. P. Komarek, Hochstromanwendung der Supraleitung, 1995). Ein Supraleiterdraht ist bei Wechselstrombetrieb nicht verlustfrei, sondern stets sind zwei grundsätzliche Verlustmechanismen wirksam, nämlich Wirbelstromverluste in der Matrix und Ummagnetisierungsverluste ("Hystereseverluste") im harten Supraleiter selbst. Bei Gleichstrombetrieb sind die Verluste in einem Supraleiterdraht praktisch null.

Aus der Literatur ist ein Strombegrenzer bekannt, dessen supraleitende Drossel durch Gleichrichter auf der Gleichstromseite geschaltet wird (Boenig, H.J., and D.A. Paice, 1983, Fault Current Limiter using a Superconducting Coil, IEEE Transactions on Magnetics, Vol. 19, no. 3, p. 1051, May). In Reihe mit der Drossel auf der Gleichstromseite ist eine Spannungsquelle geschaltet. Diese Spannungsquelle sichert das Fließen eines Stromes $I_0$ in der Drossel. Der Wert des Stromes $I_0$ übersteigt die Amplitude des Wechselstromes, welcher durch den Begrenzer fließt, solange kein Fehlerfall vorliegt, und ist wesentlich kleiner als der Kurzschlussstrom. Die Brücke lässt dann auch den Laststrom durchfließen. Dabei ist der Spannungsabfall über dem Begrenzer gleich dem Spannungsabfall über den Ventilen in zwei Schultern der Brücken.

In der FR-N° 1.337.971 wird ein elektrischer Schaltkreis vorgestellt, der aus einer Last besteht, die über eine Schutzschaltung an eine elektrische Energiequelle angeschlossen ist. Die Schutzschaltung dient zur Begrenzung der Stromänderung, um die Schlagartigkeit einer Stromänderung in der Last abzumildern. Die Schutzbeschaltung besteht aus zwei in Reihe geschalteten Induktivitäten, die von zwei in Reihe geschalteten, ungesteuerten Ventilen, Dioden, überbrückt sind. Die Dioden haben entgegengesetzte Durchlassrichtung. Der gemeinsame Punkt der Dioden und der Induktivitäten sind direkt miteinander verbunden. Ungesteuerte Ventile sperren nur bei den Strömen, die größer sind als der Ansprechstrom der Schutzeinrichtung, der dem Anfangsstrom in den Induktivitäten entspricht, und leiten die hohen Stromteile über die Induktivitäten. Dagegen werden die bei Wechselströmen immer auch vorhandenen kleineren Ströme nahezu ungehindert über die Dioden geleitet (Diodenwiderstand in Durchlassrichtung). Der in den Induktivitäten fließende Strom kann dem nach dem Strommaximum wieder abnehmenden Netzstrom nicht folgen, da er durch die Dioden kurzgeschlossen wird, und bleibt dabei im Wesentlichen auf dem erreichten Wert.

Die Betrachtung der jeweils nächsten Halbwelle wird aufgeteilt in Ströme unterhalb des Ansprechstroms und darüber. Kleinere Ströme nehmen den Weg über die leitende Diode, während die höheren Ströme über die Induktivitäten fließen und den dort bereits fließenden Strom erhöhen. Dieser Vorgang wiederholt sich mit jeder Halbwelle für den jeweils wirksamen Teil der Schaltung. Das führt bei einem Kurzschluss zu einem wesentlichen Anstieg des Stromes in den Induktivitäten und in den äußeren Stromkreisen während des Zeitintervalls, welches zum Abschalten der Einrichtung mindestens erforderlich ist (100 - 150 msec) und besonders während des Zeitintervalls (1 - 2 sec), welches für die Sicherung des selektiven Ansprechens der Schutzeinrichtungen benötigt wird.

Durch die Verwendung von aktiv halbgesteuerten Ventilen, z. B. Thyristoren, in Brückenschaltung wird eine effektivere Begrenzung des Kurzschlussstromes erreicht. Es wird eine Leistungssteuerung bewirkt, die im Fehlerfall den durch die Spule fließenden Strom zu Null steuert. (Boenig, H.J., and D.A. Paice, 1983, Fault Current Limiter using a Superconducting Coil, IEEE Transactions on Magnetics, Vol. 19, no. 3, p. 1051, May; FR-N° 1.337.971). Allerdings ist in diesem Fall eine spezielle Apparatur erforderlich, welche einen Kurzschluss identifiziert und den Steueralgorithmus für die Thyristoren in der Brücke verändert, d. h. in diesem Fall handelt es sich nicht um einen sicher arbeitenden Strombegrenzer mit passiver Triggerung. Der Strombegrenzer ist in diesem Fall kein passiv triggerbares Element mehr. Er benötigt eine spezielle Steuereinheit für den Thyristor, Das verringert die Zuverlässigkeit des Strombegrenzers wesentlich.

Im Fehlerfall, wenn die Amplitude des Wechselstromes den Wert $I_0$ in der Drossel übersteigt, wird der Kurzschlussstrom durch die Induktivität der Drossel begrenzt. Die Begrenzung des Kurzschlussstromes wird durch den Wert der maximalen Energie bestimmt, die während des transienten Prozesses in der Drossel gespeichert wird:

$$W_{max} = L * I_{max}^2 / 2$$

Eine Optimierung des Strombegrenzers bedeutet eine Minimierung der ir der Drossel gespeicherten Energie ($W_{max}$).

Im Strombegrenzer nach DE 100 03 556 triggern sich die Ventile des Strombegrenzers im Fehlerfall, also beim Überschreiten eines vorgegeben hohen Stromes, der über dem Nennstrom liegt, selbst spontan, also passiv. Sie gehen vom leitenden in den sperrenden Zustand über und bleiben in diesem. Die beiden Induktivitäten L wirken während des Fehlerfalls als zusätzlicher Wechselstromwiderstand 2ωL im Stromkreis, wodurch bei entsprechender Dimensionierung dieser der Kurzschlussstrom anlagenverträglich/-schonend begrenzt wird.

Der in der DE 100 03 556 beschriebene Strombegrenzer ist für den seltenen Fehlerfall des Kurzschlusses in der angeschlossenen Anlage vorgesehen. Dieser wird beherrscht, solange die beiden Ventile funktionstüchtig sind. Die Schutzfunktion der beiden Ventile ist für die angeschlossene Anlage von hoher und zentraler Bedeutung. Der sehr seltene Fehlerfall des Ausfalls/Durchschlag eines Ventils oder beider wäre katastrophal, da dann keine wirkungsvolle Strombegrenzung im Kurzschlussfall mehr bestehen würde. Der Abbau der im Stromkreis vorhandenen elektrischen Energie wäre widerstandslos und liefe damit wasserfallartig unter widerstandsloser Energiewandlung und damit einhergehender Zerstörung in kürzester Zeit ab, zumindest bis schließlich übergeordnete Schutzhierarchien aktiviert und wirksam ausgelöst werden könnten. Ein weiterer Strombegrenzer zur Strombegrenzung im Fehlerfall ist aus WO 03/044922 bekannt.

Daraus stellte sich die Aufgabe, die der Erfindung zugrunde liegt. Der bekannte Strombegrenzer für die Begrenzung des Anlagenstromes im Fehlerfall soll selbst mit einer passiv wirkenden, spontan reagierenden Schutzeinrichtung versehen werden, die den Kurzschlussstrom bei Zerstörung/Durchschlag eines der oder beider Ventile von Anfang an zeitlich zumindest so lange beschränkt hält, bis eine aktive Ganzabschaltung der Anlage/des betroffenen Netzes über den vorhandenen Anlagenschutz ohne schon eingetretene Zerstörungen wirksam ausgelöst wird.

Die Aufgabe wird durch die zusätzliche Einrichtung zur Strombegrenzung in dem oben beschriebenen Strombegrenzer gemäß den gekennzeichneten Merkmalen des Anspruchs 1 gelöst.

Der Aufbau der zusätzlichen Schutzeinrichtung ist folgender:

Zu den beiden Ventilen 3 und 4, den Hauptventilen, die halbgesteuert beispielsweise Thyristoren oder vollgesteuert Transistoren sind, ist jeweils ein weiteres elektrisches Ventil 7 bzw. 8, das Zusatzventil, mit gleicher Durchlassrichtung in Reihe geschaltet. Diese beiden Ventilzweige, einmal mit dem Hautventil 3 und dem Zusatzventil 7 in Reihe und zum andern mit dem Hautventil 4 und dem Zusatzventil 8 in Reihe, sind an ihrem gemeinsamen Potentialpunkt direkt oder indirekt (siehe DE 100 03 556) mit dem gemeinsamen Potentialpunkt der beiden Induktivitäten elektrisch verbunden. Vom gemeinsamen Potentialpunkt der beiden Ventilzweige gesehen, kann das Zusatzventil 7 bzw. 8 dem Hauptventil 3 bzw. 4 folgen oder umgekehrt.

Die beiden Zusatzventile 7 und 8 sind jeweils durch eine gleiche, passiv komplexes Beschaltung 5 bzw. 6 überbrückt, die bis zum Nennbetrieb vom Widerstand her und im Fehlerfall, Kurzschluss in der angeschlossenen Anlage, bei intakten Hauptventilen ebenfalls nicht "gesehen" werden. Nur in dem sehr seltenen Fehlerfall des Kurzschlusses in der Anlage und/oder einem oder beiden zerstörten/durchgeschlagenen Hauptventilen wirkt oder wirken die passiv komplexe/n Beschaltung/en am zugehörigen Zusatzventil oder an beiden entsprechend ihrer Dimensionierung sofort, den Kurzschluss begrenzend, beim Übergang des Zusatzventils oder der beiden Zusatzventile in den sperrenden Zustand, der an dem dem betroffenen Hauptventil zugeordneten Zusatzventil mit dem ersten Nulldurchgang nach Überschreiten der Fehlerstromschranke selbsttätig und damit spontan passiv erfolgt. Mit dem folgenden Nulldurchgang setzt die Sperrung im andern Ventilzweig vollends ein.

Allgemein kann mit der passiv komplexen Beschaltung 5 bzw. 6 die Spannung $U_7$ bzw. $U_8$ an dem zugehörigen Zusatzventil 7 bzw. 8 gemessen werden. An der passiv komplexen Beschaltung tritt im Fehlerfall die Spannung $U_{7MAX}$ bzw. $U_{8MAX}$ an dem zugeordneten Zusatzventil 7 bzw. 8 auf. Die passiv komplexe Beschaltung 5 und 6 ist jeweils derartig ausgelegt ist, dass im fehlerfreien Betrieb des Strombegrenzers die maximale Spannung $U_{7MAX}$ bzw. $U_{8MAX}$ über dem Zusatzventil 7 bzw. 8 unterhalb der Spannung $U_{3MAX}$ bzw. $U_{4MAX}$ über dem Hauptventil 3 bzw. 4 oder einer vorgebbaren Spannung $U_{V1}$ liegt und im Fehlerfall des Kurzschlusses im Hauptventil 3 oder 4 oder in beiden die Spannung $U_{7MAX}$ oder $U_{8MAX}$ oder beide über der zu vergleichenden Spannung $0,5\,U_{3MAX}$ oder $0,5\,U_{4MAX}$ am Hauptventil 3 oder 4 oder über der vorgebbaren Spannung $U_{V2}$ liegt. Hier wird die Schutzfunktion dieser zusätzlichen Einrichtung deutlich, mit der der sehr seltene Fehlerfall eines plötzlich ausfallenden oder ausfallender beider Hauptventile in seiner Auswirkung mit Beginn des Eintritts spontan begrenzt wird oder werden. Aus dem plausiblen Grund der Unabhängigkeit wird die angepasste Spannung $kU_7$ bzw. $kU_8$, k ist ein Faktor < 1 (Spannungsteilung), über dem Zusatzventil 7 bzw. 8 vorzugsweise mit einer Referenzspannung $U_{ref}$ verglichen, um bei elektronischer Verknüpfung einen einstellbaren, festen Bezug zur Bildung eines Signals für Fehlererkennung im Strombegrenzer zu haben. Hauptsächlich aber soll eine Schädigung der Ventile 7 und 8 durch die anliegende Spannung ausgeschlossen werden. Im Normal-/Nennbetrieb wird beispielsweise eine Auslegung und Einstellung/Dimensionierung des komplexen Netzwerks folgendermaßen eingerichtet:

Kein Fehler solange ist:

$$k\ U_{7MAX} < k\ 0,5\ U_{3MAX}(k\ U_{V1}) = U_{ref}$$

und

$$k\ U_{8MAX} < k\ 0,5\ U_{8MAX}(k\ U_{V1}) = U_{ref};$$

Fehlererkennung im Strombegrenzer, eventuell, wenn

$$k\ U_{7MAX},\ k\ U_{8MAX} > k\ U_{V2} = U_{ref}.$$

Aus technischen Sicherheitsgründen wird ein Spannungsabstand gehalten und deshalb die Spannungsgleichheit nicht verwendet.

In den Unteransprüchen 2 bis 6 werden die Bauteile und Netzwerke als Schaltkreiskomponenten spezifiziert. Die beiden Zusatzventile 7 und 8 sind nach Anspruch 2 ungesteuerte, also Dioden, nach Anspruch 3 halbgesteuerte, also Thyristoren, oder vollgesteuerte Ventile, also Transistoren.

Die jeweilige Beschaltung über den zusätzlichen Ventilen ist im Allgemeinen komplex. Nach Anspruch 4 ist sie ein Sonderfall, da sie nur einen Realteil besitzt. Das ist im Falle des Aufbaus mit nur ohmschen Widerständen hinsichtlich des Schwingens unproblematisch. Reaktanzkompensation, im einfachsten Fall $j\omega L + 1/j\omega C = 0$, ist frequenzgebunden und daher wegen der Frequenzzusammensetzung von Stoßvorgängen zu vermeiden, da eine Schwingungsanregung dabei unvermeidlich ist. Nach Anspruch 5 ist die passiv komplexe Beschaltung ein R-C-Netzwerk, besteht also aus mindestens einem Kondensator C und mindestens einem ohmschen Widerstand R. In Anspruch 6 ist ein R-L-Netzwerk.

Anspruch 7 trägt der Spannungsfestigkeit und Stromtragfähigkeit des Strombegrenzers mit zusätzlicher Strombegrenzungs- und Schutzeinrichtung Rechnung. Er beschreibt, wie die beiden Hauptventile sowie die beiden Zusatzventile, angepasst an die geforderte Spannungsfestigkeit, jeweils aus einer Hintereinanderschaltung und, angepasst an die Stromtragfähigkeit, aus einer Parallelschaltung aus mindestens einem gruppenspezifischen Elementarventil bestehen. In dem Fall, dass das Zusatzventil aus wenigstens zwei hintereinander geschalteten Elementarventilen besteht, wird jedes Elementarventil oder im Falle von Parallelschaltungen jede Elementarzusatzventilreihe mit einer gleichartigen, passiv komplexen Elementarbeschaltung versehen. Die passiv komplexe Beschaltung setzt sich dann aus den beteiligten Elementarbeschaltungen zusammen, das bei der Dimensionierung von Anlagenfall zu Anlagenfall Beachtung finden muss.

Die Zusatzbeschaltung wird bis zum Nennbetrieb, vom elektrischen Widerstand her, nicht gesehen. Im seltenen Ereignis des Kurzschlussfalls in der Anlage verursachen die intakten Ventile die Widerstandseinschaltung und damit die Strombegrenzung. Im sehr seltenen Fall des Anlagenkurzschlusses und wenigstens einem nicht funktionierenden/durchgeschlagenen Hauptventil übernimmt das zugehörige Zusatzventil die Einschaltung der effektiven Strombegrenzung. Mit der zusätzlichen Einrichtung zur Strombegrenzung wird erreicht:

> eine spontane und effektive Begrenzung des Stromes bei einem Kurzschluss in den Stromversorgungssystemen und bei einem Ventildurchschlag;
> eine geringere Dimensionierung der Komponenten der Stromversorgungssysteme;
> die Sicherung der Selektivität des Ansprechens der Schutzeinrichtungen bei einem Kurzschluss in den Stromversorgungssystemen und bei einem Ventildurchschlag;
> die Fehlererkennung in den Ventilen.

Es wird somit eine Minimierung der Fehlerfolgen bei Ventildurchschlag im eigentlichen Strombegrenzer (nach DE 100 03 556) erreicht.

Die Erfindung wird anhand der Zeichnung mit den darin aufgeführten, beispielsweisen Ausführungen der zusätzlichen Einrichtung zur Strombegrenzung näher erläutert: Es zeigen:

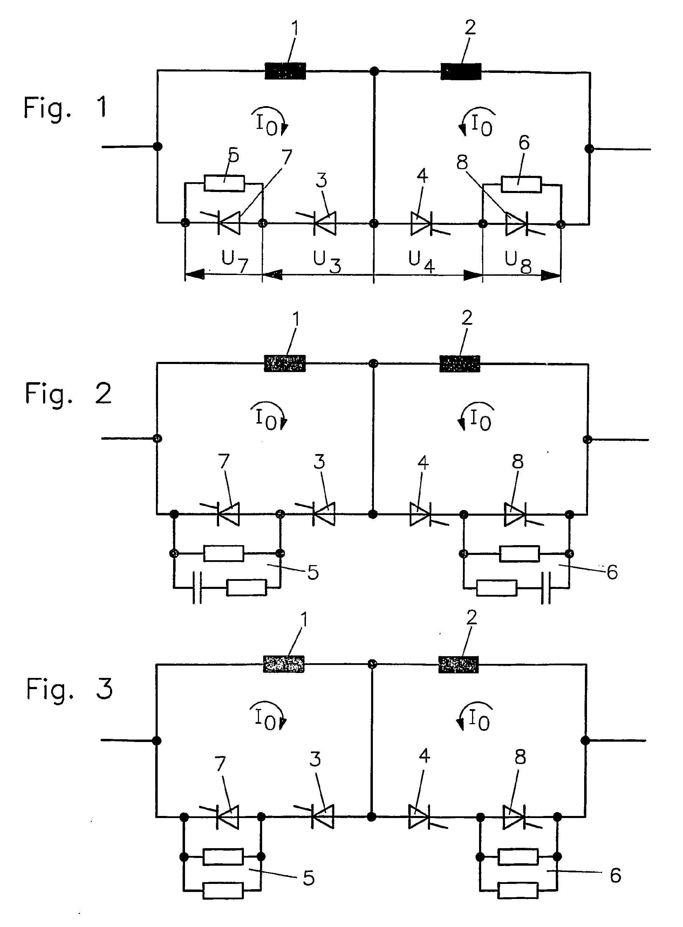

> Figur 1: den Strombegrenzer mit resistiver Beschaltung am Zusatzventil;
> Figur 2: den Strombegrenzer mit R-C-Beschaltung am Zusatzventil;
> Figur 3: den Strombegrenzer mit R-L-Beschaltung am Zusatzventil.

Die Ventile des Strombegrenzers sind hier als Hauptventile 3 und 4 Thyristoren und als Zusatzventile ebenfalls Thyristoren 7 und 8. Alle Ventile 3, 4, 7, 8 sind halbgesteuerte Ventile. Alle Ventile 3, 4, 7, 8 sind für den maximalen Strom und die maximale Spannung ausgelegt, die bei einem Kurzschluss im Stromversorgungssystem auftreten können.

Bei Inbetriebnahme der Einrichtung erfolgt ein Zünden der Thyristoren 3, 7 und 4, 8 und ein Ansteigen des Stromes durch die Drosseln 1 und 2 bis zum (Konstant- oder Gleich-) Strom $I_0$ dessen Wert die Amplitude des Wechselstromes $I_{max}$ übersteigt, welcher durch den Begrenzer im Normalbetrieb fließt und kleiner ist als der Kurzschlussstrom. Solange in dem Stromkreis, der durch den Strombegrenzer geschützt wird, keine Fehler auftreten, ist in den zusätzlichen Schutzbeschaltungen der Strom durch das Ventile 7 gleich dem Strom durch Ventil 3 und entsprechend der Strom durch Ventil 8 gleich dem Strom durch Ventil 4.

Nach dem Ansteigen des Stromes in der Drosseln 1 und 2 bis $I_0$ ändert sich der Strom durch die Thyristoren 3, 7 und 4, 8 im Normalbetrieb während einer Periode des Wechselstroms entsprechend den folgenden Gleichungen (1):

$$I_{3,7} = I_0 + I_{MAX} \sin(\omega t + \varphi_0),$$

$$I_{4,8} = I_0 - I_{MAX} \sin(\omega t + \varphi_0).$$

Der Strom durch die Drosseln bleibt dabei gleich $I_0$. Beim Auftreten eines Kurzschlusses sperren (nichtleitend) zunächst eine der zwei Paaren von Thyristoren, z. B. Thyristoren 3 und 7, da eine umgekehrte Spannung an dem Thyristoren 3 und 7 auftritt. Ist der Zeitraum, während dem eine umgekehrte Spannung an den Thyristoren 3, 7 anliegt, gleich oder größer, als die Zeit der Wiederherstellung der elektrischen Festigkeit des Thyristors, bleiben die Thyristoren 3 und 7 in diesem Zustand. Andernfalls entsteht eine ähnliche Situation mit den Thyristoren 4, 8. Dabei wächst der Strom in der Drossel 2 und wird den Wert $I_0$ übersteigen. Bei einem solchen Kurzschluss entsteht an den in Reihe geschalteten Ventile 3 und 7 bzw. 4 und 8 eine Spannung $U_3 + U_7$ bzw. $U_4 + U_8$ mit einer der Durchlassrichtung entgegengesetzten Polarität. Die Spannung wird dabei zwischen den erwähnten Thyristoren 3, 4 und den entsprechenden Ventilen 7, 8 in den zusätzlichen Schutzbeschaltungen geteilt. Die passiv komplexe Beschaltungen 5 und 6, in der Fachsprache Snubber genannt, sind so ausgewählt, dass dabei die Spannung über den Ventilen 7, 8 ($U_7$, $U_8$) wesentlich kleiner ist als die Spannung über den Ventilen 3, 4 ($U_3$, $U_4$), zum Beispiel $U_7 < 0{,}3\, U_3$ und $U_8 < 0{,}3\, U_4$. Dadurch wird eine Beschädigung der Ventile 7, 8 durch die anliegende Spannung ausgeschlossen. Die Spannungen $U_3$, $U_4$ und

insbesondere $U_7$, $U_8$ sind darüber hinaus, nach entsprechender bekannter Aufbereitung analog und gegebenenfalls digital transformiert, für die Überwachung und Initiierung der vorhandenen verschiedenen Schutzhierarchien verwendbar.

Im Fall einer Beschädigung des Ventils 3 bzw. 4 wird die volle Spannung an das Ventil 7 bzw. 8 der zugehörigen zusätzlichen Einrichtungen angelegt und der Kurzschlussstrom durch die Drossel 1, 2 sowie den beiden passiv komplexen Beschaltungen begrenzt. Der Strom, der durch die Snubber 5, 6 fließt, stellt nur einen unwesentlichen Teil des Kurzschlussstromes, etwa 1 bis 3 %, dar. Die in den beiden Snubbern 5 und 6 gespeicherte bzw. freigesetzte Energie ist auch nur ein unwesentlicher Teil der in den Induktivitäten 1 und 2 gespeicherten Energie, < 2%.

Die Funktion des Strombegrenzers wird durch die Parameter der Drosseln 1, 2 und der Ventile 7, 8 bestimmt. Bei halbgesteuerten Ventile 7 bzw. 8, also Thyristoren, weicht der Kurzschlussstrom selbst im Fall eines Durchschlags in den Ventilen 3, 4 nicht wesentlich von dem Strom bei normaler Funktion des Strombegrenzers ab.

**Bezugszeichenliste:**

| 1 | Induktivität |
|---|---|
| 2 | Induktivität |
| 3 | Hauptventil |
| 4 | Hauptventil |
| 5 | Passiv komplexe Beschaltung |
| 6 | Passiv komplexe Beschaltung |
| 7 | Zusatzventil |
| 8 | Zusatzventil |

**Patentansprüche**

1. Strombegrenzer zur Strombegrenzung im Fehlerfall,
   wobei der Strombegrenzer besteht aus:

   zwei in Reihe zueinander geschalteten, gleichartigen Induktivitäten/Drosseln (1), (2) und
   zwei gleichartigen, in Reihe mit zueinander entgegengesetzter Durchlassrichtung geschalteten, die beiden Induktivitäten (1), (2) überbrückenden, gesteuerten elektrischen Ventilen (3), (4)

   wobei:

   zu den beiden Ventilen (3), (4), den Hauptventilen, jeweils ein weiteres elektrisches Ventil (7), (8), das Zusatzventil, mit gleicher Durchlassrichtung in Reihe liegt,
   der gemeinsame Potentialpunkt dieser beiden gleichartigen Ventilzweige mit dem gemeinsamen Potentialpunkt der beiden Induktivitäten (1), (2) verbunden ist,
   die beiden Zusatzventile (7), (8) jeweils durch eine gleiche, passiv komplexe Beschaltung (5), (6) zur Strombegrenzung im Fehlerfall und
   zur Spannungsermittlung ($U_7$, $U_8$) über dem zugehörigen Zusatzventil (7), (8) überbrückt sind, **dadurch gekennzeichnet, dass** die passiv komplexe Beschaltung (5), (6) derartig ausgelegt ist, dass im fehlerfreien Betrieb des Strombegrenzers die maximale Spannung ($U_{7MAX}$, $U_{8MAX}$) über dem Zusatzventil (7), (8) unterhalb der maximalen Spannung ($U_{3MAX}$, $U_{4MAX}$) über dem Hauptventil (3), (4) liegt und im Fehlerfall des Kurzschlusses/Durchschlags im Hauptventil (3), (4) oder in beiden Hauptventilen (3), (4), die maximale Spannung ($U_{7MAX}$, $U_{8MAX}$) über dem Zusatzventil (7), (8) über der Hälfte der maximalen Spannung über dem Hauptventil (0, 5 $U_{3MAX}$, 0, 5 $U_{4MAX}$) liegt.

2. Strombegrenzer nach Anspruch 1, **dadurch gekennzeichnet, dass** die beiden Zusatzventile (7) und (8) ungesteuerte Ventile, Dioden, sind.

3. Strombegrenzer nach Anspruch 1, **dadurch gekennzeichnet, dass** die beiden Zusatzventile (7) und (8) gesteuerte Ventile, wie Thyristoren als halbgesteuerte Ventile oder Transistoren als vollgesteuerte Ventile sind.

4. Strombegrenzer nach einem der Ansprüche 2 bis 3, **dadurch gekennzeichnet, dass** die passiv komplexe Beschaltung (5) bzw. (6) aus resistiven Bauelementen aufgebaut ist.

**5.** Strombegrenzer nach einem der Ansprüche 2 bis 3, **dadurch gekennzeichnet, dass** die passiv komplexe Beschaltung (5) bzw. (6) ein R-C-Netzwerk ist.

**6.** Strombegrenzer nach einem der Ansprüche 2 bis 3, **dadurch gekennzeichnet, dass** die passiv komplexe Beschaltung (5) bzw. (6) ein R-L-Netzwerk ist.

**7.** Strombegrenzer nach einem der Ansprüche 1 bis 6, **dadurch gekennzeichnet, dass** die beiden Hauptventile (3) und (4) sowie die beiden Zusatzventile (7) und (8), angepasst an die geforderte Spannungsfestigkeit, jeweils aus einer Hintereinanderschaltung und, angepasst an die Stromtragfähigkeit, aus einer Parallelschaltung aus mindestens einem gruppenspezifischen Elementarventil besteht,
wobei sich die zugehörige passiv komplexe Beschaltung (5) bzw. (6) am Zusatzventil (7) bzw. (8) aus gleichartigen passiv komplexen Elementarbeschaltungen zusammensetzt, die jeweils eine Stufe der hintereinander geschalteten zusätzlichen Elementarventile (7) bzw. (8) überbrücken.

**Claims**

**1.** Current limiter for limiting current in the event of a fault,
wherein the current limiter consists of:

two inductors/chokes (1), (2) of the same type, connected in series, and
two controlled electric valves (3), (4) of the same type, connected in series with mutually opposed conducting directions, bypassing the two inductors (1), (2) **wherein**
in each case, a further electric valve (7), (8), the additional valve, is connected in series with the two valves (3), (4), the main valves, with the same conducting direction, the common potential point of these two valve branches of the same type being connected to the common potential point of the two inductors (1), (2), the two additional valves (7), (8), in each case being bypassed by an identical passively complex connection (5), (6) for limiting current in the event of a fault, and
for determining the voltage ($U_7$, $U_8$) are bypassed via the pertinent additional valve (7), (8), **characterised in that** the passive complex connection (5) (6) is arranged in such a way that, in fault-free operation of the current limiter, the maximum voltage ($U_{7MAX}$, $U_{8MAX}$) is imposed via the additional valve (7), (8), below the maximum voltage ($U_{3MAX}$), $U_{4MAX}$) via the main valve (3) (4), and in the event of a fault of short-circuit/ breakdown in the main valve (3), (4) or in both main valves (3), (4), the maximum voltage ($U_{7MAX}$, $U_{8MAX}$) is imposed via the additional valve (7), (8), and half the maximum voltage via the main valve (0.5 $U_{3MAX}$, 0.5 $U_{4MAX}$).

**2.** Current limiter according to claim 1, **characterised in that** the two additional valves (7) and (8) uncontrolled valves, diodes.

**3.** Current limiter according to claim 1, **characterised in that** the two additional valves (7) and (8) are controlled valves, such as thyristors as semi-controlled valves or transistors as fully controlled valves.

**4.** Current limiter according to any one of claims 2 to 3, **characterised in that** the passive complex connection (5) or (6) respectively are formed from resistive structural elements.

**5.** Current limiter according to any one of claims 2 to 3, **characterised in that** the passive complex connection (5) or (6) respectively is an R-C network.

**6.** Current limiter according to any one of claims 2 to 3, **characterised in that** the passive complexe connection (5) or (6) respectively is an R-L network.

**7.** Current limiter according to any one of claims 1 to 6, **characterised in that** the two main valves (3) and (4), and the two additional valves (7) and (8), adjusted to the dielectric strength required, consist in each case of an arrangement in series, and, adjusted to the current carrying capacity, in the case of a parallel arrangement, of at least one group-specific elementary valve, wherein the related passive complex connection (5) or (6) respectively at the additional valve (7) or (8) respectively consists of identical passive complex elementary connections, which in each case bypass a stage of the series-connected additional elementary valves (7) or (8) respectively.

**Revendications**

**1.** Limiteur d'intensité pour limiter l'intensité d'un courant en cas de défaut,
le limiteur d'intensité comprenant :

- deux inductances/bobines (1, 2) analogues, branchées en série l'une par rapport à l'autre, et
- deux soupapes électriques commandées (3, 4) analogues, branchées en série l'une par rapport à l'autre, et
- deux soupapes électriques commandées (3, 4) analogues, branchées en série avec un sens passant opposé l'un par rapport à l'autre, et court-circuitant les deux inductances (1, 2),

limiteur dans lequel
pour les deux soupapes (3, 4), soupapes principales, il y a chaque fois une autre soupape électrique (7, 8), soupape additionnelle, montée en série et avec le même sens passant,

- le point de potentiel commun de branches de soupape analogues, étant relié au point de potentiel commun des deux inductances (1, 2),
- les deux soupapes additionnelles (7, 8) étant court-circuitées chaque fois par un même circuit passif complexe (5, 6) pour limiter le courant en cas de défaut,
- pour déterminer la tension ($U_7$, $U_8$) aux bornes de la soupape additionnelle (7, 8),

limiteur **caractérisé en ce que**
le circuit passif complexe (5, 6) est conçu pour qu'en mode sans défaut du limiteur d'intensité, la tension maximale ($U_{7MAX}$, $U_{8MAX}$) aux bornes de la soupape additionnelle (7, 8) soit inférieure à la tension ($U_{3MAX}$, $U_{4MAX}$) aux bornes de la soupape principale (3, 4), et
en cas de défaut de court-circuit ou de passage dans la soupape principale (3, 4) ou dans les deux soupapes principales, la tension maximale ($U_{7MAX}$, $U_{8MAX}$) aux bornes de la soupape additionnelle (7, 8) dépasse la tension maximale aux bornes de la soupape principale ($0,5\ U_{3MAX}$, $0,5\ U_{4MAX}$).

**2.** Limiteur d'intensité selon la revendication 1,
**caractérisé en ce que**
les deux soupapes additionnelles (7, 8) sont des soupapes non commaridées, des diodes.

**3.** Limiteur d'intensité selon la revendication 1,
**caractérisé en ce que**
les deux soupapes additionnelles (7, 8) sont des soupapes commandées telles que des thyristors comme soupapes semi-commandées ou des transistors comme soupapes totalement commandées.

**4.** Limiteur d'intensité selon l'une des revendications 2 à 3,
**caractérisé en ce que**
le circuit complexe passif (5, 6) est formé de composants résistifs.

**5.** Limiteur d'intensité selon l'une des revendications 2 à 3,
**caractérisé en ce que**
le circuit passif complexe (5, 6) est un réseau (R-C).

**6.** Limiteur selon l'une des revendications 2 à 3,
**caractérisé en ce que**
le circuit passif complexe (5, 6) est en réseau (R-L).

**7.** Limiteur selon l'une des revendications 1 à 6,
**caractérisé en ce que**
les deux soupapes principales (3 et 4) ainsi que les deux soupapes additionnelles (7, 8) sont adaptées à la tenue en tension, requise, chaque fois'à partir d'un branchement en série et sont adaptées à la capacité de passage de courant à partir d'un montage en parallèle composé d'au moins une soupape élémentaire spécifique au groupe,
le circuit passif complexe (5, 6) correspondant de la soupape additionnelle (7, 8) étant composé de composants élémentaires analogues, complexes, passifs qui court-circuitent respectivement un étage des soupapes élémentaires (7, 8) additionnelles, branchées l'une derrière l'autre.

Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10003556
- FR 1337971
- WO 03044922 A

### In der Beschreibung aufgeführte Nicht-Patentliteratur

- **BOENIG, H.J. ; D.A. PAICE.** Fault Current Limiter using a Superconducting Coil. *IEEE Transactions on Magnetics,* Mai 1983, vol. 19 (3), 1051